# EUROPÄISCHE PATENTANMELDUNG

(11) **EP 2 801 498 A1**
(43) Veröffentlichungstag der Anmeldung: **12.11.2014**
(21) Anmeldenummer: 13166872.5
(22) Anmeldetag: 07.05.2013
(51) Int. Cl.: B60L 11/18

(54) **Anordnung und Verfahren zum induktiven Laden von mobilen Geräten**

(71) Anmelder: Brusa Elektronik AG, 9466 Sennwald (CH)
(72) Erfinder: Krause, Axel, 9650 Nesslau (CH); Matt, Phillipp, 6820 Frastanz (AT)
(74) Vertreter: Patentbüro Paul Rosenich AG

(57) **Zusammenfassung**

Die Primärseite (P) einer Anordnung zum induktiven Laden eines elektrisch betriebenen Gerätes (F) weist eine Primärspule mit zumindest zwei Wicklungen (1, 2, 2a, 2b) auf. Jede zweite Wicklung (2, 2a, 2b) weist eine geringere Windungszahl auf als die erste Wicklung (1) und ist radial ausserhalb der ersten Wicklung (1) angeordnet. Der Windungssinn der zweiten Wicklungen (2, 2a, 2b) der Primärspule (P) ist entgegengesetzt zum Windungssinn der ersten Wicklung (1).

## Beschreibung

Die Erfindung betrifft eine Anordnung zum induktiven Laden von mobilen Geräten, nach dem Oberbegriff des Anspruchs 1, sowie ein Verfahren zum Betreiben einer Anordnung zum induktiven Laden von mobilen Geräten, nach dem Oberbegriff des Anspruchs 11.

In der WO 2007019806 A1 ist eine Anordnung zum induktiven Laden von mobilen Geräten beschrieben. Dazu ist eine induktive Lade-Plattform mit einer Oberfläche vorgesehen, auf der ein elektrisches, zu ladendes Gerät platziert werden kann. Es ist eine erste Wicklung zur Erzeugung magnetischer Feldlinien senkrecht zur Oberfläche der Lade-Plattform vorgesehen. Um den Spannungseinbruch durch Verringerung des Flusses im Zentrum der ersten Spule zu kompensieren, ist im Bereich innerhalb der ersten Spule eine zweite Wicklung vorgesehen, die einen ebenfalls senkrecht zur Oberfläche der Lade-Plattform orientierten und parallel zum Magnetfeld der ersten Spule ausgerichteten magnetischen Fluss erzeugt. Der Stromfluss in beiden Wicklungen verläuft daher ebenfalls parallel.

In der EP 2267864 A2 ist eine berührungslose Ladeeinrichtung für ein elektrisches Gerät, beispielsweise eine elektrische Zahnbürste, beschrieben. Über eine Primärspule wird Energie übertragen und von einer Sekundärspule im aufzuladenden Gerät aufgenommen. Es ist eine zusätzliche Spule in der Ladeeinrichtung vorgesehen, mittels welcher ebenfalls berührungslos Energie zur Aktivierung einer Mitteilungseinheit übertragen wird, wobei das Magnetfeld dieser zweiten Spule aber zu keiner beabsichtigten Formung oder Abschirmung des Feldes der Primärspule dient.

Bei einem berührungslosen Ladegerät für ein tragbares Gerät sind gemäss der WO 023764 A1 auf ein und demselben Kern eine Primärwicklung und eine mit einer geringeren Anzahl von Windungen versehene Hilfswicklung aufgebracht. Die Hilfswicklung ist mit einer Steuer- und Schutzeinrichtung verbunden, hat aber keine Funktion zur Beeinflussung des Feldes der Primärwicklung.

Das induktive Laden von zumindest teilweise elektrisch betriebenen Fahrzeugen wurde schon in vielen Varianten erprobt. Eine Variante ist die Energieübertragung auf das Fahrzeug vorzugsweise über im Boden befindliche Induktionsschleifen. Dabei können wiederum zwei Ausführungsformen unterschieden werden, nämlich das stationäre Laden des parkierten Fahrzeugs und das mobile Laden während der Fahrt über in der Fahrbahn bzw. im Boden verlegte Induktionsleitungen.

Bei beiden Varianten wird durch eine Induktionswicklung der Primärseite am oder im Boden unterhalb des Fahrzeuges ein magnetisches Dipol-Wechselfeld im Frequenzbereich von 25 kHz bis 150 kHz erzeugt, sobald das System ein ladebereites Fahrzeug erkennt oder der Ladevorgang manuell gestartet wird. Ein Teil dieses Feldes durchdringt eine Sekundärspule der Sekundärseite im Fahrzeug und ermöglicht so eine kontaktlose Energieübertragung ähnlich einem Transformator.

Je besser die Kopplung zwischen der im Boden verlegten Induktionsschleife und der fahrzeugseitigen Empfängerspule ist, desto kleiner ist die erforderliche "Blindleistung" (Energie pro Zeiteinheit, die zum Aufbau und Erhalt des Magnetfeldes benötigt wird, die aber nichts zur übertragenden Nutzenergie beiträgt) zur Erzeugung des Feldes. Bei gegebenem Abstand zwischen Fahrbahn und Fahrzeug-Unterboden wird die Kopplung umso besser, je grösser der mittlere Durchmesser der Schleife bzw. der Abstand der in der Fahrbahn verlegten Leitungen ist.

Damit nimmt aber gleichzeitig der ausserhalb des Fahrzeugs befindliche und somit nicht nutzbare Teil des magnetischen Dipolfeldes stark zu. Insbesondere bei hohen Übertragungsleistungen können dann im zugänglichen Bereich neben dem Fahrzeug die zulässigen Grenzwerte (beispielsweise der Wert von 6.25µT gemäss der International Commission on Non-Ionizing Radiation Protection (ICNIRP)) für magnetische Wechselfelder deutlich überschritten werden.

Aufgabe der vorliegenden Erfindung ist es somit, insbesondere diesen Nachteil zu vermeiden und das Streufeld ausserhalb des unmittelbaren Ladebereiches des elektrischen Gerätes oder des elektrisch betriebenen Fahrzeuges zu reduzieren.

Die Aufgabe wird durch die Merkmale der unabhängigen Ansprüche 1 und 11 gelöst. Vorteilhafte Weiterbildungen sind in den Figuren, der detaillierten Beschreibung und in den jeweiligen abhängigen Patentansprüchen dargelegt.

Gemäss der Erfindung ist eine Anordnung zum induktiven Laden von mobilen Geräten, die mit zumindest einer Sekundärspule zum Aufnehmen von induktiv übertragener Energie ausgestattet sind, welche Anordnung eine Primärseite mit zumindest einer Primärspule mit zumindest einer ersten Wicklung und zumindest einer zweiten Wicklung zur Erzeugung magnetischer Feldlinien senkrecht zu einer Oberfläche der Primärseite umfasst, gegen welche Oberfläche die Sekundärspule des mobilen Gerätes zuwendbar ist, dadurch gekennzeichnet, dass die oder jede zweite Wicklung radial ausserhalb der ersten Wicklung liegt und der Windungssinn jeder zweiten Wicklung entgegengesetzt zum Windungssinn der ersten Wicklung ist. Der Begriff "radial ausserhalb" umfasst dabei, dass zumindest eine zweite Wicklung einen grösseren Radius als die erste Wicklung aufweist und diese aussen komplett umgibt. Dabei liegt die von der ersten Wicklung begrenzte Fläche innerhalb der von der zweiten Wicklung begrenzten Fläche. Der Begriff "radial ausserhalb" umfasst aber auch eine Bedeutung, gemäss welcher zumindest eine zweite Wicklung vorzugsweise komplett ausserhalb der von der ersten Wicklung begrenzten Fläche liegt. Durch den Strom in der zweiten Wicklung, der "Kompensationswicklung", wird im äusseren Bereich der ersten Wicklung, der "Hauptspule", ein magnetisches Gegenfeld erzeugt. Bei angemessener Dimensionierung wird so das Streufeld ausserhalb der Primärspule(n) reduziert, so dass vorgeschriebene Grenzwerte eingehalten werden können.

Bevorzugt liegt dabei zumindest eine zweite Wicklung konzentrisch zur ersten Wicklung, was sowohl die bauliche Ausführung vereinfacht als auch zu einer optimalen Ausrichtung der magnetischen Feldlinien von erster Wicklung und der Anordnung von zweiten Wicklungen führt.

Eine andere vorteilhafte Ausführungsform der Erfindung sieht dagegen vor, dass zumindest zwei Wicklungen mit der ersten Wicklung entgegengesetztem Windungssinn auf einander gegenüberliegenden Seiten der ersten Wicklung angeordnet sind. Diese Ausführungsform ermöglicht eine geringere Dimensionierung in einer Richtung, was besonders bei Anwendungen zum induktiven Laden von Elektrofahrzeugen von Vorteil ist. Hier können die beiden "Kompensationswicklungen" symmetrisch zur Fahrzeuglängsachse seitlich neben der ersten Wicklung angeordnet sein, womit eine in Fahrzeuglängsrichtung gesehen kurze Baugrösse möglich ist.

Vorteilhafterweise ist vorgesehen, dass jede zweite Wicklung eine kleinere Windungszahl aufweist als die erste Wicklung. Damit wird die Energieübertragung durch die Primärwicklung nicht zu sehr geschwächt. Insbesondere in Kombination mit der oben dargelegten geometrischen Anordnung der Wicklungen erfolgt nur eine Reduktion des radial aussen liegenden Streufeldes, ohne die hauptsächlich im Zentrum der ersten Wicklung erfolgende Energieübertragung auf die Sekundärseite massgeblich zu verringern.

Gemäss einer erfindungsgemässen Ausführungsform ist zumindest eine der zweiten Wicklungen in Serie zur ersten Wicklung geschaltet, womit eine separate Ansteuerung der beiden Wicklungen vermieden werden kann. Dies erlaubt eine einfache bauliche Anordnung ohne separate Schaltungsanordnungen für die beiden Wicklungen.

Dabei ist bevorzugt zumindest eine zweite Wicklung der ersten Wicklung nachgeschaltet, was zu einem optimalen Aufbau der magnetischen Felder der beiden Wicklungen beiträgt.

Vorzugsweise ist für eine optimale Energieübertragung zwischen der Primärseite mit den beiden Wicklungen und der Sekundärseite vorgesehen, dass die erste Wicklung und zumindest eine der zweiten Wicklungen an einer Hochfrequenz-Spannungsquelle angeschlossen sind.

Um eine laststromunabhängige Erzeugung eines oder mehrerer Kompensationsfelder zu ermöglichen, kann vorteilhafterweise eine Ausführungsform der Erfindung vorgesehen sein, bei welcher die erste Wicklung und die zweiten Wicklungen an jeweils einer separaten Hochfrequenz-Spannungsquelle angeschlossen sind, wobei vorzugsweise jede der zweiten Wicklungen an jeweils einer separaten Hochfrequenz-Spannungsquelle angeschlossen ist. Die Kompensationsfelder können dann in Abhängigkeit von einer allfälligen Fehlposition der Primärseite gegenüber der Sekundärseite individuelle gesteuert und adaptiert werden, um eine optimale Begrenzung der magnetischen Streufelder zu gewährleisten. Dies ist insbesondere bei Ladestationen für Elektrofahrzeuge vorteilhaft, da damit beispielsweise trotz Abweichungen von der exakten Parkierposition des Fahrzeuges mit seiner Sekundärspule nicht genau und konzentrisch oberhalb der Primärspule die Streufelder allseitig unterhalb vorgegebener Grenzwerte gehalten werden können.

Die erfindungsgemässe Anordnung kann in besonders vorteilhafter Weise zum induktiven Laden von zumindest teilweise elektrisch betriebenen Fahrzeugen vorgesehen sein, wenn dabei zumindest die erste Wicklung und jede zweite Wicklung nahe und gegenüber der Sekundärspule des zu ladenden Fahrzeuges platzierbar oder platziert sind. Damit kann eine gute Kopplung von Primär- und Sekundärseite für eine optimale Energieübertragung erzielt werden.

Bevorzugt sind die erste Wicklung und zumindest eine der zweiten Wicklungen an einem Boden bzw. an oder in einer Fahrbahn unterhalb des Fahrzeuges platzierbar oder platziert, was einerseits einen geringen Abstand zwischen der Primärseite und der typischerweise im Bodenbereich des Fahrzeuges angeordneten Sekundärseite erlaubt und das magnetische Wechselfeld in einen Bereich mit normalerweise grossem Abstand zum Benutzer verlegt.

Beim Verfahren zum Betreiben einer Anordnung zum induktiven Laden von mobilen Geräten, die mit zumindest einer Sekundärspule zum Aufnehmen von induktiv übertragener Energie ausgestattet sind, werden mittels einer Primärseite mit zumindest einer Primärspule mit zumindest einer ersten Wicklung und zumindest einer zweiten Wicklung ein Magnetfeld mit magnetischen Feldlinien senkrecht zu einer Oberfläche der Primärseite erzeugt. Hier ist zur Lösung der eingangs gestellten Aufgabe erfindungsgemäss vorgesehen, dass mit der oder jeder zweiten Wicklung im äusseren Bereich der ersten Wicklung ein Magnetfeld mit magnetischen Feldlinien erzeugt wird, welche zumindest eine den Feldlinien der ersten Wicklung entgegengesetzte Komponente aufweisen. Die den magnetischen Feldlinien der ersten Wicklung entgegengesetzten Feldlinien der zweiten Wicklung bilden ein "Gegenfeld", insbesondere im radial äusseren Bereich bezogen auf die Achse der ersten Wicklung. Das "Gegenfeld" reduziert das Streufeld ausserhalb der Primärspule(n) derart, dass vorgeschriebene Grenzwerte eingehalten werden können.

Bevorzugt wird dabei zumindest eine der zweiten Wicklungen vom gleichen Strom durchflossen wie die erste Wicklung, was die bauliche Anordnung aber auch deren Stromversorgung und Ansteuerung wesentlich vereinfacht.

Vorteilhafterweise in Bezug auf den Aufbau und die Ausbildung der Magnetfelder wird zumindest eine der zweiten Wicklungen nachfolgend zur ersten Wicklung vom Strom durchflossen.

Eine vorteilhafte Ausführungsform sieht vor, dass die erste Wicklung und zumindest eine der zweiten Wicklungen von einer Hochfrequenz-Spannungsquelle versorgt werden. Damit ist eine optimale Energieübertragung gewährleistet.

Das erfindungsgemässe Verfahren findet bevorzugt Anwendung zum Betreiben der Primärseite zum induktiven Laden von zumindest teilweise elektrisch betriebenen Fahrzeugen.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1a: eine schematische Darstellung des induktiven Ladens eines parkierten, elektrisch betriebenen Fahrzeuges (Elektroauto),
- Fig. 1b: eine schematische Darstellung des induktiven Ladens eines Elektroautos während der Fahrt,
- Fig. 2a: eine schematische Draufsicht auf eine erfindungsgemässe Ausführungsform einer induktiven Ladeanordnung für ein Elektroauto,
- Fig. 2b: eine schematische Vorderansicht einer erfindungsgemässen Ausführungsform einer induktiven Ladeanordnung für ein Elektroauto,
- Fig. 2c: eine schematische Draufsicht wie in Fig. 2a auf eine alternative Ausführungsform einer induktiven Ladeanordnung für ein Elektroauto, und
- Fig. 3: ein Diagramm der magnetischen Feldstärke mit und ohne Kompensation, aufgetragen über dem Abstand zur Mitte der Primärspule.

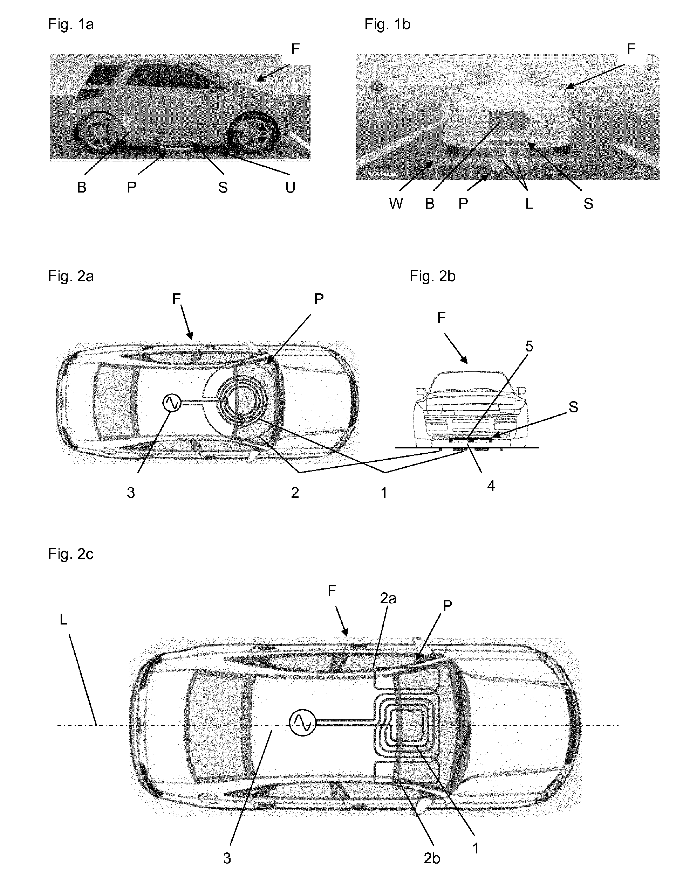

Fig. 1 a zeigt ein elektrisch betriebenes Fahrzeug F, das an beispielsweise einer Ladestation parkiert ist. Diese Ladestation umfasst, im Boden U unterhalb des Fahrzeuges F eingelassen, eine Primärspule P der Primärseite. Die Induktionswicklung der Primärspule im Boden U erzeugt, angesteuert über einen Hochfrequenz-Spannungsgenerator ein magnetisches Dipol-Wechselfeld im Frequenzbereich von 25 kHz bis 150 kHz, sobald das System der Ladestation ein ladebereites Fahrzeug erkennt oder sobald der Benutzer die Ladestation manuell in Betrieb nimmt. Ein Teil des Feldes der Primärspule P durchdringt die im Fahrzeug F vorgesehene Sekundärspule S und ermöglicht so eine kontaktlose Energieübertragung zur Aufladung der Batterie B des Fahrzeuges F.

In Fig. 1b ist eine ähnliche Anordnung für die induktive Ladung des Fahrzeugs F während der Fahrt dargestellt. In der Fahrbahn W sind über eine bestimmte Strecke Induktionsleitungen L verlegt. Das von diesen Induktionsleitungen L erzeugte und sich entlang der Induktionsleitungen L erstreckende magnetische Dipol-Wechselfeld, wieder vorzugsweise im Frequenzbereich von 25 kHz bis 150 kHz, durchdringt wieder eine Sekundärspule S des Fahrzeugs F und bewirkt damit die Aufladung der Batterie B des Fahrzeugs F während des Betriebs.

Eine beispielhafte Ausführungsform einer erfindungsgemäss gestalteten Primärseite ist in den Figs. 2a und 2b schematisch dargestellt. Die Primärseite P weist hier eine Primärspule mit zwei Wicklungen 1 und 2 auf. Die erste Wicklung 1 besteht aus vier Windungen, an die sich eine zweite Wicklung 2 mit nur einer Windung anschliesst. Die zweite Wicklung 2 ist dabei radial ausserhalb der ersten Wicklung 1, vorzugsweise aber koaxial und weiter vorzugsweise auch koplanar zu dieser, angeordnet. Die von der ersten Wicklung 1 begrenzte Fläche liegt also innerhalb der von der zweiten Wicklung 2 begrenzten Fläche. Vorzugsweise sind die erste Wicklung 1 als auch die zweite Wicklung 2 unterhalb des Fahrzeugs F im Boden eingelassen. Die Wicklungen 1 und 2 können auch Teil einer tragbaren Platte sein, die unterhalb eines Fahrzeuges F platziert werden kann, wo immer auch ein Stromanschluss vorhanden ist.

Wie aus Fig. 2a ersichtlich ist, ist der Windungssinn der zweiten Wicklung 2 der Primärspule entgegengesetzt zum Windungssinn der ersten Wicklung 1. Die zweite Wicklung 2 ist aber vorzugsweise in Serie zur ersten Wicklung 1 geschaltet, vorzugsweise dieser ersten Wicklung 1 nachgeschaltet. Beide Wicklungen 1 und 2 werden vorzugsweise über eine Hochfrequenz-Quelle 3 versorgt, es können aber auch separate Quellen 3 für jede der Wicklungen 1 bzw. 2 vorgesehen sein. Mit der zweiten Wicklung 2 werden magnetischen Feldlinien erzeugt, welche zumindest eine den Feldlinien der ersten Wicklung 1 entgegengesetzte Komponente aufweisen und damit das magnetische Feld ausserhalb der aus den Wicklungen 1 und 2 bestehenden Primärspule rasch abklingen zu lassen.

In der Draufsicht der Fig. 2a ist eine im Wesentlichen kreisförmige erste Wicklung 1 - d.h. eine Wicklung 1 mit in einer Ebene liegenden kreisförmigen Abschnitten mit jeweils geringfügig unterschiedlichem Radius - dargestellt. Auch die zweite Wicklung 2 ist im Wesentlichen kreisförmig. Die Wicklungen 1, 2 können auch spiralförmig ausgestaltet sein. Selbstverständlich sind aber auch andere geometrische Formen für die Wicklungen 1, 2 möglich. So sind insbesondere rechteckförmige oder quadratische Geometrien für die Praxis besonders relevant weil einfach in der Herstellung und mit ähnlich gutem Verhältnis von Umfang (und damit Platzbedarf und Materialverbrauch) und Fläche (für eine möglichst hohe Energieübertragung). In Fig. 2b ist auch die am oder im Fahrzeug F befindliche Sekundärseite mit der Sekundärwicklung 4 und deren vorzugsweise vorgesehene Ferrit-Abschirmung 5 dargestellt. Die fahrzeugseitige Sekundärwicklung 4 benötigt als "Empfängerspule" keine zweite Wicklung. Auch für die Sekundärspule S gelten die obigen Ausführungen zur Geometrie.

Eine weitere alternative Ausführungsform für eine Primärspule P ist in der Draufsicht der Fig. 2c dargestellt. Von einer zentralen ersten Wicklung 1 in hier ebener und rechteckiger Form und mit einem vorgegebenen Windungssinn werden zwei weiteren Wicklungen 2a, 2b nach ausserhalb der ersten Wicklung 1 geführt. Die beiden Wicklungen 2a, 2b liegen in Bezug auf die Fahrzeuglängsachse L seitlich neben der ersten Wicklung 1 und vorzugsweise in der gleichen Ebene wie diese erste Wicklung 1. Dazu wird von der ersten Wicklung 1, vorzugsweise vom radial äussersten Wicklungsabschnitt eine linke Wicklung 2a mit entgegengesetztem Wicklungssinn nach aussen, seitlich der ersten Wicklung 1 geführt. Von dieser linken Wicklung 2a führt ein Windungsabschnitt auf die bezüglich der Fahrzeuglängsachse L gegenüberliegende rechte Seite und geht dort in eine rechte Wicklung 2b mit dem gleichen Windungssinn wie die linke Wicklung 2a über. Schliesslich wird diese Wicklung 2b wieder in den radial äussersten rechten Abschnitt der ersten Wicklung 1 zurückgeführt und komplettiert damit die erste Wicklung 1. Die vordere bzw. hintere Begrenzung (wieder in Bezug auf die Fahrzeuglängsachse L) der ersten Wicklung 1 und der Wicklungen 2a, 2b fallen vorzugsweise zusammen.

Besonders bei einer Ausführungsform mit mehreren ausserhalb der ersten Wicklung 1 liegenden zweiten Wicklungen 2a, 2b wie beispielsweise in Fig. 2c ist deren Versorgung mittels einer gemeinsamen Hochfrequenz-Spannungsquelle 3 oder mittels vorzugsweise separaten Hochfrequenz-Spannungsquellen 3 für jede zweite Wicklung 2a, 2b vor Vorteil. Diese separate und damit auch individuell steuerbare Energieversorgung der zweiten Wicklungen 2a, 2b gestattet die laststromunabhängige Kompensation des Streufeldes der ersten Wicklung 1 durch ein oder mehrere Kompensationsfelder gegebenenfalls unterschiedlicher Stärke und Ausrichtung der Magnetfeldlinien.

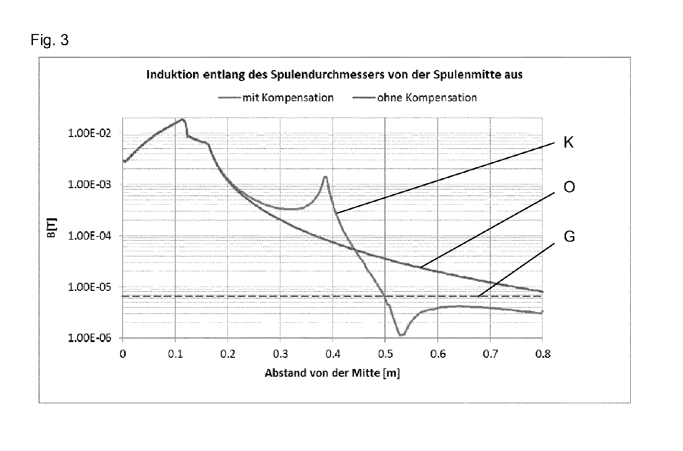

Im Diagramm der Fig. 3 ist der Verlauf der magnetischen Flussdichte aufgetragen über dem Abstand von der Mitte der Primärspule P. Der von der ICNIRP vorgeschriebene Grenzwert für die magnetische Flussdichte beträgt derzeit 6.25 µT und ist als strichlierte horizontale Linie G eingetragen. Der Verlauf der magnetischen Flussdichte mit einer üblichen Primärspule P mit nur einer Wicklung 1 mit ein und demselben Wicklungssinn ist durch die Linie O charakterisiert. Sogar in 0.8 m Abstand zur Spulenmitte wird der Grenzwert von 6.25 µT noch überschritten. Hingegen kann durch eine konzentrische Kompensationswicklung, d. h. durch eine zweite Wicklung 2, 2a, 2b mit geringerer Windungszahl aber entgegengesetztem Windungssinn als die erste Wicklung 1, ein Verlauf wie durch Linie K erzielt werden. Bei einem derartigen Verlauf wird der Grenzwert ab einem Abstand von 0.5 m von der Spulenmitte bereits unterschritten.

**Bezugszeichenliste**

| | |
|---|---|
| F | Fahrzeug |
| P | Primärspule |
| S | Sekundärspule |
| B | Batterie |
| U | Boden |
| W | Fahrbahn |
| L | Fahrzeuglängsachse |
| 1 | Erste Wicklung |
| 2 | Zweite Wicklung |
| 2a, 2b | Linke und rechte zweite Wicklung |
| 3 | Hochfrequenz-Quelle |
| 4 | Sekundärwicklung |
| 5 | Ferrit-Abschirmung |
| G | Grenzwert |
| O | Verlauf der magnetischen Flussdichte ohne Kompensation |
| K | Verlauf der magnetischen Flussdichte mit Kompensation |

## Patentansprüche

1. Anordnung zum induktiven Laden von mobilen Geräten (F), die mit zumindest einer Sekundärspule (S) zum Aufnehmen von induktiv übertragener Energie ausgestattet sind, welche Anordnung eine Primärseite mit zumindest einer Primärspule (P) mit zumindest einer ersten Wicklung (1) und zumindest einer zweiten Wicklung (2, 2a, 2b) zur Erzeugung magnetischer Feldlinien senkrecht zu einer Oberfläche der Primärseite umfasst, gegen welche Oberfläche die Sekundärspule (S) des mobilen Gerätes (F) zuwendbar ist, **dadurch gekennzeichnet, dass** die oder jede zweite Wicklung (2, 2a, 2b) radial ausserhalb der ersten Wicklung (1) liegt und dass der Windungssinn jeder zweiten Wicklung (2, 2a, 2b) entgegengesetzt zum Windungssinn der ersten Wicklung (1) ist.

2. Anordnung nach Anspruch 1, **dadurch gekennzeichnet, dass** zumindest eine zweite Wicklung (2) konzentrisch zur ersten Wicklung (1) liegt.

3. Anordnung nach Anspruch 1, **dadurch gekennzeichnet, dass** zumindest zwei Wicklungen (2a, 2b) mit der ersten Wicklung (1) entgegengesetztem Windungssinn auf einander gegenüberliegenden Seiten der ersten Wicklung (1) angeordnet sind.

4. Anordnung nach zumindest einem der Ansprüche 1 bis 3, **dadurch gekennzeichnet, dass** jede zweite Wicklung (2, 2a, 2b) eine kleinere Windungszahl aufweist als die erste Wicklung (1).

5. Anordnung nach zumindest einem der Ansprüche 1 bis 4, **dadurch gekennzeichnet, dass** zumindest eine der zweiten Wicklungen (2, 2a, 2b) in Serie zur ersten Wicklung (1) geschaltet ist.

6. Anordnung nach Anspruch 5, **dadurch gekennzeichnet, dass** zumindest eine zweite Wicklung (2) der ersten Wicklung (1) nachgeschaltet ist.

7. Anordnung nach zumindest einem der Ansprüche 1 bis 6, **dadurch gekennzeichnet, dass** die erste Wicklung (1) und zumindest eine der zweiten Wicklungen (2, 2a, 2b) an einer Hochfrequenz-Spannungsquelle (3) angeschlossen sind.

8. Anordnung nach zumindest einem der Ansprüche 1 bis 6, **dadurch gekennzeichnet, dass** die erste Wicklung (1) und die zweiten Wicklungen (2a, 2b) an jeweils einer separaten Hochfrequenz-Spannungsquelle (3) angeschlossen sind, wobei vorzugsweise jede der zweiten Wicklungen (2a, 2b) an jeweils einer separaten Hochfrequenz-Spannungsquelle (3) angeschlossen ist.

9. Anordnung nach zumindest einem der Ansprüche 1 bis 8, zum induktiven Laden von zumindest teilweise elektrisch betriebenen Fahrzeugen (F), **dadurch gekennzeichnet, dass** zumindest die erste Wicklung (1) und jede zweite Wicklung (2, 2a, 2b) nahe und gegenüber der Sekundärspule (S) des zu ladenden Fahrzeuges (F) platzierbar oder platziert sind.

10. Anordnung nach Anspruch 9, **dadurch gekennzeichnet, dass** die erste Wicklung (1) und zumindest eine der zweiten Wicklungen (2, 2a, 2b) an einem Boden (U) unterhalb des Fahrzeuges (F) platzierbar oder platziert sind.

11. Verfahren zum Betreiben einer Anordnung zum induktiven Laden von mobilen Geräten (F), die mit zumindest einer Sekundärspule (S) zum Aufnehmen von induktiv übertragener Energie ausgestattet sind, wobei mittels einer Primärseite mit zumindest einer Primärspule (P) mit zumindest einer ersten Wicklung (1) und zumindest einer zweiten Wicklung (2, 2a, 2b) ein Magnetfeld mit magnetischen Feldlinien senkrecht zu einer Oberfläche der Primärseite erzeugt wird, **dadurch gekennzeichnet, dass** mit der oder jeden zweiten Wicklung (2, 2a, 2b) im äusseren Bereich der ersten Wicklung (1) ein Magnetfeld mit magnetischen Feldlinien erzeugt wird, welche zumindest eine den Feldlinien der ersten Wicklung (1) entgegengesetzte Komponente aufweisen.

12. Verfahren nach Anspruch 11, **dadurch gekennzeichnet, dass** zumindest eine der zweiten Wicklungen (2, 2a, 2b) vom gleichen Strom durchflossen wird wie die erste Wicklung (1).

13. Verfahren nach Anspruch 11 oder 12, **dadurch gekennzeichnet, dass** zumindest eine der zweiten Wicklungen (2, 2a, 2b) nachfolgend zur ersten Wicklung (1) vom Strom durchflossen wird.

14. Verfahren nach zumindest einem der Ansprüche 11 bis 13, **dadurch gekennzeichnet, dass** die erste Wicklung (1) und zumindest eine der zweiten Wicklungen (2, 2a, 2b) von einer Hochfrequenz-Spannungsquelle (3) versorgt werden.

15. Verfahren nach zumindest einem der Ansprüche 11 bis 14, zum Betreiben der Primärseite zum induktiven Laden von zumindest teilweise elektrisch betriebenen Fahrzeugen (F).
